# FASCICULE DE BREVET EUROPEEN

(11) **EP 3 771 562 B1**
(45) Date de publication et mention de la délivrance du brevet: **07.05.2025**
(21) Numéro de dépôt: 20187048.2
(22) Date de dépôt: 21.07.2020
(51) Int. Cl.: B33Y 80/00, B22F 3/105, B22F 3/11, B29C 64/00, E05G 1/024, B22F 3/00

(54) **ENCEINTE À ACCÈS SÉCURISÉ COMPRENANT DES PAROIS À STRUCTURE MONOBLOC**
BEHÄLTER MIT GESICHERTEM ZUGANG, DER WÄNDE IN MONOBLOCKSTRUKTUR UMFASST
ENCLOSURE WITH SECURE ACCESS COMPRISING WALLS WITH SINGLE-PIECE STRUCTURE

(30) Priorité: 31.07.2019 FR 1908770
(43) Date de publication de la demande: 03.02.2021
(73) Titulaire: Fichet Bauche, 51110 Bazancourt (FR)
(72) Inventeur: JOIGNAUX, Fabien, 08270 FAISSAULT (FR)
(74) Mandataire: Weinstein Services & Conseils

(56) Documents cités:
- CN-A- 105 571 400
- IL-A- 60 725
- US-B1- 8 155 496

## Description

L'invention s'inscrit dans le domaine des enceintes sécurisées contre le vol, comprises dans des meubles tels que les coffres-forts et les armoires fortes ou des pièces ou logements d'immeuble comme les chambres fortes ou les compartiments bancaires. S'agissant des meubles, l'invention s'applique aux différents modèles, y compris leurs versions ignifuges. L'invention s'inscrit aussi dans l'équipement de telles pièces d'immeuble sécurisées ou encore d'ameublements sécurisés préexistants, et dans les procédés de sécurisation et d'utilisation associés. L'invention a trait plus particulièrement aux parois de ces enceintes à accès sécurisé protégeant ou du moins ralentissant une intrusion à l'intérieur de l'enceinte.

Les enceintes sécurisées comprennent généralement plusieurs parois formant une caisse, de forme couramment parallélépipédique, définissant un intérieur creux. Les enceintes sécurisées comprennent également une porte sécurisée permettant l'accès audit intérieur.

Les enceintes sécurisées ont pour fonction d'au moins ralentir une intrusion dans leur intérieur protégeant des objets disposés dans l'enceinte.

Afin d'améliorer la protection de ces objets, il est connu que les parois des enceintes sécurisées comprennent diverses structures formant des réseaux et éventuellement un matériau de remplissage durci coulé sur lesdites structures en réseau.

Le document FR2511424A1 décrit des parois d'une enceinte à accès sécurisé comprenant diverses structures anti-vérin et anti perforation. Les parois comprennent un panneau extérieur et un panneau intérieur sous forme de tôle, disposés de part et d'autre des structures. Les parois comprennent également du béton coulé entre les panneaux. Les structures en réseau comprennent un maillage carré de tiges d'aciers ligaturées ou soudées les unes aux autres et, entre ce maillage et le panneau extérieur, des ressorts de compression en acier disposés verticalement et éventuellement vrillés entre eux.

Le document EP0172065A1 décrit une paroi, pouvant par exemple équiper une enceinte à accès sécurisé, pour la protection contre les outils perforants revêtant par exemple la forme de couronnes diamantées. La paroi comprend un panneau intérieur, une grille solidaire du panneau et des boîtiers encastrés dans la grille Ces boîtiers comportent des billes mobiles. La paroi comprend également une autre grille disposée à l'opposé du panneau intérieur par rapport aux boîtiers. La paroi comprend un matériau de remplissage durci, par exemple du béton ou du caoutchouc synthétique, noyant les grilles et les boîtiers. Les billes, enfermées dans leur boîtier, restent libres en rotation.

De telles parois permettent de ralentir une intrusion au travers de celles-ci afin de protéger des objets disposés de l'autre côté de ces parois.

Cependant, de telles parois comprennent de multiples pièces augmentant leur encombrement et leur temps de fabrication. De plus, la multiplication des pièces augmente le poids de telles parois compliquant leur mise en place et les contraintes liées à leur support. La multiplication des pièces complique également le bon écoulement du matériau de remplissage autour des structures en réseau. En outre, les structures formant des réseaux n'absorbent que très peu les chocs, cassant rapidement après des chocs répétés.

Un autre paroi de protection contre une intrusion comprenant un panneau interne, un panneau externe, une structure alvéolée et un matériau de remplissage durci est connu par le document IL60725A.

L'objectif de l'invention est de proposer une paroi, par exemple pour enceinte à accès sécurisé, ralentissant une intrusion au travers de celle-ci, la paroi présentant une résistance au moins égale à celle des parois de l'art antérieur, requérant une fabrication simplifiée, étant plus légère que les parois de l'art antérieur, facilitant le bon écoulement du matériau de remplissage avant son durcissement et absorbant mieux les chocs.

A cet effet, il est proposé, en premier lieu, une paroi de protection contre une intrusion comprenant un panneau interne, un panneau externe et une structure alvéolée formant un réseau à trois dimensions entre le panneau interne et le panneau externe, tel que défini dans la revendication 1.

Une telle paroi ralentit une intrusion au travers de celle-ci.

La structure alvéolée forme, en outre, avec le panneau interne et le panneau externe un dispositif monobloc.

Ainsi, la paroi présente une résistance au moins égale à celle des parois de l'art antérieur tout en étant plus légère, absorbant mieux les chocs et étant plus simple de fabrication des parois de l'art antérieur.

En outre, la paroi de protection comprend un matériau de remplissage durci dans les alvéoles de la structure alvéolée augmentant la résistance de la paroi à une intrusion, et se morcelant lors d'une tentative d'intrusion tout en restant emprisonné dans la paroi grâce à la structure alvéolée. Par ailleurs, chaque alvéole de la structure alvéolée forme autour du matériau de remplissage un premier passage disposé suivant un axe de coulée sensiblement parallèle au panneau interne et au panneau externe plus grand qu'un passage latéral formé par ladite alvéole suivant un axe latéral perpendiculaire à l'axe de coulée, au panneau interne et au panneau externe.

Selon une autre caractéristique, la structure alvéolée forme, suivant une direction parallèle à l'axe, au moins deux alvéoles.

Il est proposé, en deuxième lieu, un procédé de fabrication d'une paroi de protection contre une intrusion selon la revendication 3, le procédé comprenant la fabrication d'un dispositif comportant un panneau interne, un panneau externe et une structure alvéolée disposée entre le panneau interne et le panneau externe, le dispositif étant monobloc et la fabrication du dispositif étant faite par fabrication additive, directe ou indirecte et rendant plus difficile ladite intrusion. Le procédé comprend l'introduction d'un matériau de remplissage entre le panneau interne et le panneau externe, le matériau de remplissage se répartissant dans les alvéoles de la structure alvéolée, et le durcissement du matériau de remplissage, le matériau de remplissage se morcelant lors d'une tentative d'intrusion tout en restant emprisonné dans la paroi grâce à la structure alvéolée. Enfin, la fabrication de la structure alvéolée forme un dispositif monobloc dont chaque alvéole forme un passage de coulée suivant l'axe de coulée plus grand qu'un passage latéral formé par ladite alvéole suivant un axe latéral perpendiculaire à l'axe, au panneau interne et au panneau externe ; ainsi la paroi présente une résistance au moins égale à celle des parois de l'art antérieur, absorbe mieux les chocs tout en facilitant le bon écoulement du matériau de remplissage avant son durcissement.

Diverses caractéristiques supplémentaires peuvent être prévues, seules ou en combinaison :
- le matériau de remplissage introduit est du béton, du béton haute performance, du béton cellulaire, de la mousse réfractaire ou du bitume ;
- la fabrication de la structure alvéolée forme, dans une direction parallèle à l'axe latéral sensiblement perpendiculaire au panneau interne et au panneau externe, au moins deux alvéoles augmentant la résistance de la paroi et limitant le transfert thermique entre les panneaux ;
- la fabrication de la structure alvéolée forme, au niveau d'une section sensiblement parallèle au panneau interne et au panneau externe, des zones creuses et des zones pleines, un pourcentage de la superficie desdites zones creuses par rapport à la superficie desdites zones pleines étant supérieur à 85%, plus ou moins 10 points, limitant le transfert thermique entre les parois par échange thermique entre le réseau et le matériau de remplissage ;
- lors de la fabrication du dispositif, la distance la plus courte séparant le panneau interne et le panneau externe en suivant des branches des alvéoles de la structure alvéolée est au moins 1,4 fois, plus ou moins 10%, supérieure à une distance séparant le panneau interne et le panneau externe suivant l'axe latéral sensiblement perpendiculaire au panneau interne et au panneau externe limitant le transfert thermique entre les parois par échange thermique entre le réseau et le matériau de remplissage ;
- la distance séparant le panneau interne et le panneau externe suivant l'axe latéral est comprise entre 35 millimètres et 150 millimètres ;
- le dispositif monobloc est fabriqué en acier, en alliage métallique ou en céramique.

Il est proposé, en troisième lieu, une enceinte à accès sécurisé comprenant au moins deux parois de protection comme décrit précédemment, les au moins deux parois formant un unique ensemble monobloc.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant plusieurs modes de réalisation de l'invention et dans lesquels :
[Fig. 1] - la figure 1 est une vue schématique en perspective d'une enceinte sécurisée comprenant des parois ;
[Fig. 2] - la figure 2 est une vue schématique en perspective d'une des parois représentés sur la figure 1 ;
[Fig. 3] - la figure 3 est une vue schématique en perspective d'une alvéole de la paroi représentée sur la figure 2 ;
[Fig. 4] - la figure 4 est une vue schématique de dessus de la jonction de deux parois telles que représentée sur la figure 2 ;
[Fig. 5A] - la figure 5A est une vue schématique de dessus de la paroi selon le mode de réalisation représenté sur la figure 2 ;
[Fig. 5B] - la figure 5B est une vue schématique de dessus d'alvéoles d'une paroi selon un premier mode de réalisation ;
[Fig. 5C] - la figure 5C est une vue schématique de dessus d'alvéoles d'une paroi selon un deuxième mode de réalisation ;
[Fig. 6] - la figure 6 est une vue schématique de face de la paroi représentée sur la figure 2 ;
[Fig. 7] - la figure 7 est une vue schématique latérale de la paroi représentée sur la figure 2, un des panneaux étant non visible.

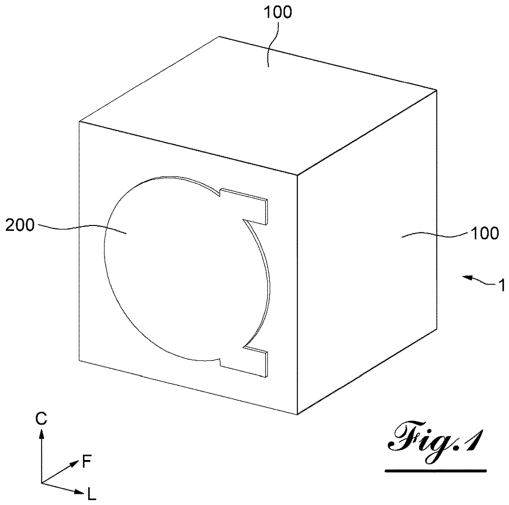

La figure 1 représente une enceinte 1 à accès sécurisé comprenant des parois 100 définissant un intérieur creux.

L'enceinte 1 comprend également une porte 200 sécurisée permettant l'accès audit intérieur.

Les parois 100 présentent, selon un mode de réalisation, une conception identique les unes aux autres.

Les parois 100 forment, selon un mode de réalisation, un ensemble monobloc.

Selon des modes de réalisation différents, une des parois 100 ou plusieurs parois est utilisée pour former une chambre forte, une armoire forte ou encore toute cloison nécessitant de protéger un élément situé derrière elle.

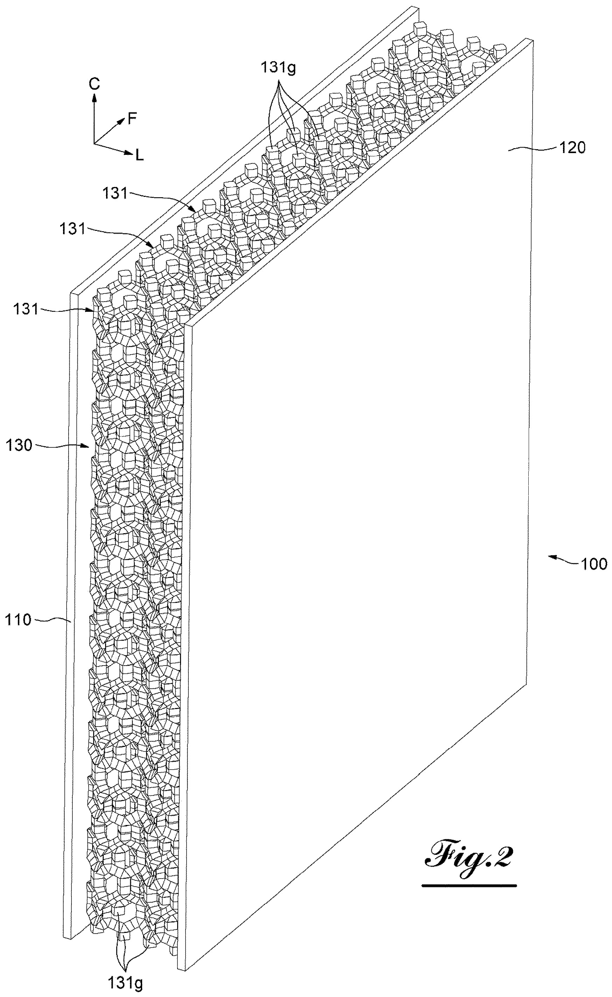

Une des parois 100 est représentée selon un mode de réalisation sur les figures 2, 5A, 6 et 7. Cette paroi 100 comprend un panneau 110 interne, un panneau 120 externe et une structure 130 alvéolée disposée entre les panneaux 110, 120.

La paroi 100 comprend éentneblement un matériau de remplissage durci coulé entre les panneaux 110, 120 de sorte à se répartir sur l'ensemble de la structure 130 alvéolée.

Selon un mode de réalisation, le matériau de remplissage durci est un matériau composite (béton, béton haute performance, béton cellulaire, mousse réfractaire, bitume,...).

Sur les figures le matériau de remplissage durci n'est pas représenté pour laisser apparaître la structure 130 alvéolée de la paroi 100.

Lors d'une tentative d'intrusion au travers de la paroi 100, le matériau de remplissage durci a tendance à se morceler mais reste emprisonné dans la paroi 100 grâce à la structure 130 alvéolée rendant plus difficile ladite intrusion.

Les panneaux 110, 120 et la structure 130 alvéolée de retenue forment un dispositif monobloc 110, 120, 130.

Selon des modes de réalisation, le matériau du dispositif monobloc 110, 120, 130 est à haute résistance mécanique comme, par exemple, de l'acier, un alliage métallique ou encore de la céramique.

Le dispositif monobloc 110, 120, 130 est fabriqué par fabrication additive, directe ou indirecte comme, par exemple, par impression 3D.

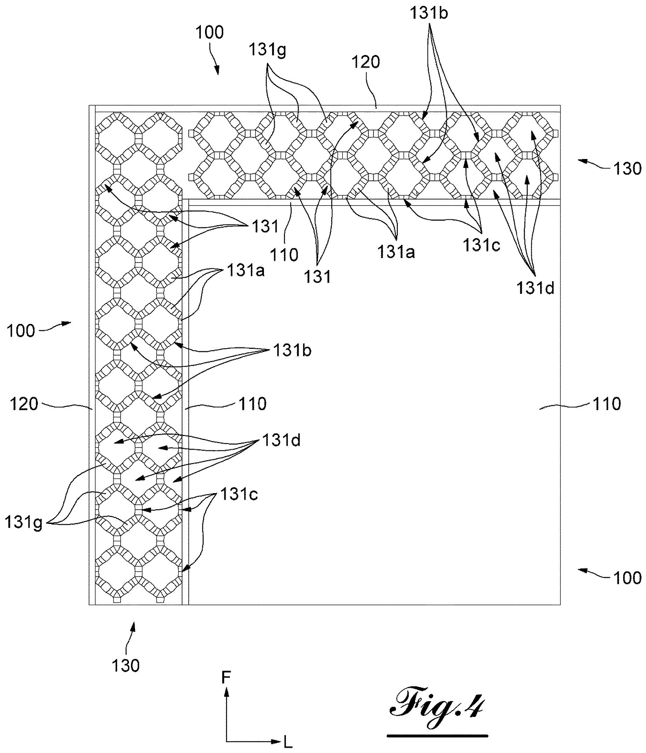

Selon un mode de réalisation représenté sur la figure 4, au niveau de la jonction de deux parois 100, la structure 130 alvéolée d'une des deux parois 100 sincère au moins partiellement dans l'autre paroi 100. Le matériau durcissant coulé dans les parois 100 maintient ainsi les deux parois 100 solidaires. Les panneaux 110 internes des parois 100 peuvent, en outre, être soudés entre eux. Les panneaux 120 externes des parois 100 peuvent, en outre, être soudés entre eux.

Une telle jonction permet d'améliorer la solidarisation des parois 100 de l'enceinte 1 sécurisée.

Selon le mode de réalisation représenté, la structure 130 alvéolée comprend des alvéoles 131 au contact les unes des autres formant un réseau.

Selon le mode de réalisation représenté, la réunion de quatre alvéoles 131 forme en leur centre une cinquième alvéole 131.

Selon le mode de réalisation illustré, la structure 130 alvéolée comprend, dans une direction parallèle à un axe L latéral, deux alvéoles 131. L'axe L latéral est sensiblement perpendiculaire aux panneaux 110, 120 interne et externe.

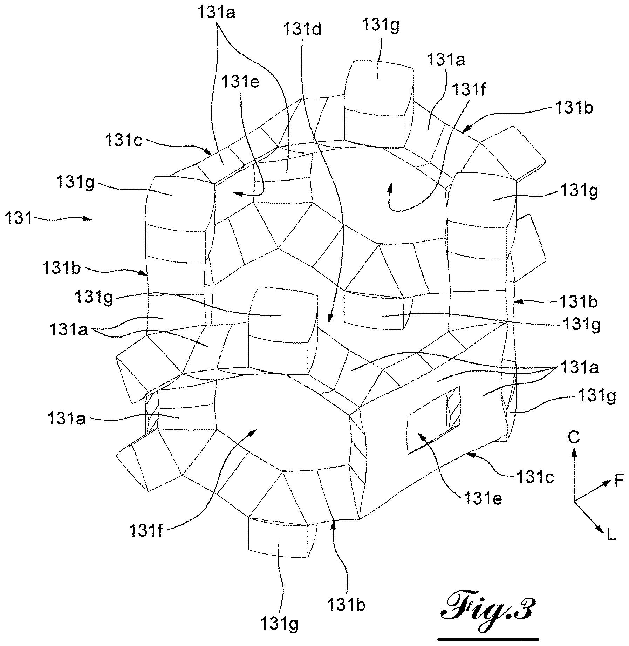

Comme on peut le voir sur la figure 3, selon le mode de réalisation représenté, une alvéole 131 comprend des branches 131a disposées bout à bout pour former des formes creuses.

Selon le mode réalisation représenté, les branches 131a présentent une section triangulaire.

Le triangle est la forme géométrique ayant le périmètre le plus grand par rapport à son aire. Ainsi, le transfert thermique au sein des alvéoles 131 est optimisé pour favoriser l'échange thermique avec le matériau de remplissage durci et donc protéger l'autre côté de la paroi 100.

Selon le mode de réalisation représenté, deux étages d'alvéoles 131 sont solidaires par le biais de plots 131g des alvéoles 131.

Selon le mode de réalisation représenté, le pourcentage d'une superficie du matériau de remplissage durci au niveau d'une section sensiblement parallèle aux panneaux 110, 120 par rapport à une superficie la structure 130 alvéolée au niveau de ladite section est, suite à des essais, supérieur à 85%, plus ou moins 10 points.

Ceci permet encore d'améliorer l'échange thermique entre les alvéoles et le matériau de remplissage durci afin donc protéger l'autre côté de la paroi 100.

Selon le mode de réalisation représenté, chaque alvéole 131 comprend quatre hexagones 131b reliés deux à deux par une branche 131a commune et deux carrés 131c reliant les deux paires d'hexagones 131b.

Les deux carrés 131c sont alignés, face à face, suivant un axe L latéral de la paroi 100.

Les branches 131a communes des paires d'hexagones sont alignées, sensiblement parallèlement, suivant un axe C de coulée de la paroi 100. L'axe C de coulée est sensiblement perpendiculaire à l'axe L latéral.

Selon un mode de réalisation, la longueur des branches 131a est comprise entre 4 et 18 mm, plus ou moins 10%.

Une telle structure des alvéoles 131 permet d'augmenter leur résistance suivant l'axe L latéral.

Une telle structure permet aux alvéoles 131 de se déformer élastiquement lors de chocs pour absorber ces derniers.

Une telle structure des alvéoles 131 permet également de maximiser une distance séparant le panneau 110 interne et le panneau 120 externe en suivant les branches 131a des alvéoles 131 par rapport à une distance séparant lesdits panneaux 110, 120 suivant l'axe L latéral.

Selon un mode de réalisation, la distance séparant le panneau 110 interne et le panneau 120 externe en suivant les branches 131a des alvéoles 131 est, suite à des essais, 1,4 à 1,6 fois, plus ou moins 10%, plus grande que la distance séparant lesdits panneaux 110, 120 suivant l'axe L latéral

L'échange thermique avec le matériau de remplissage durci est ainsi augmenté.

Selon un mode de réalisation, la distance séparant le panneau 110 interne et le panneau 120 externe suivant l'axe L latéral est comprise entre 35 et 150 mm, plus ou moins 10%.

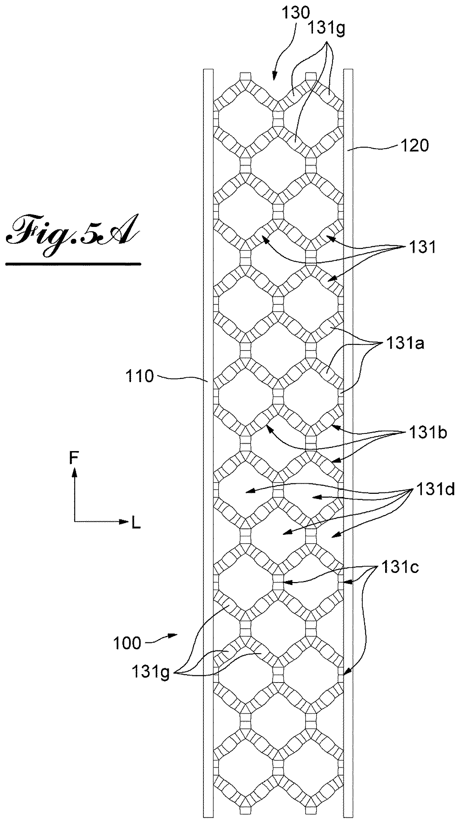

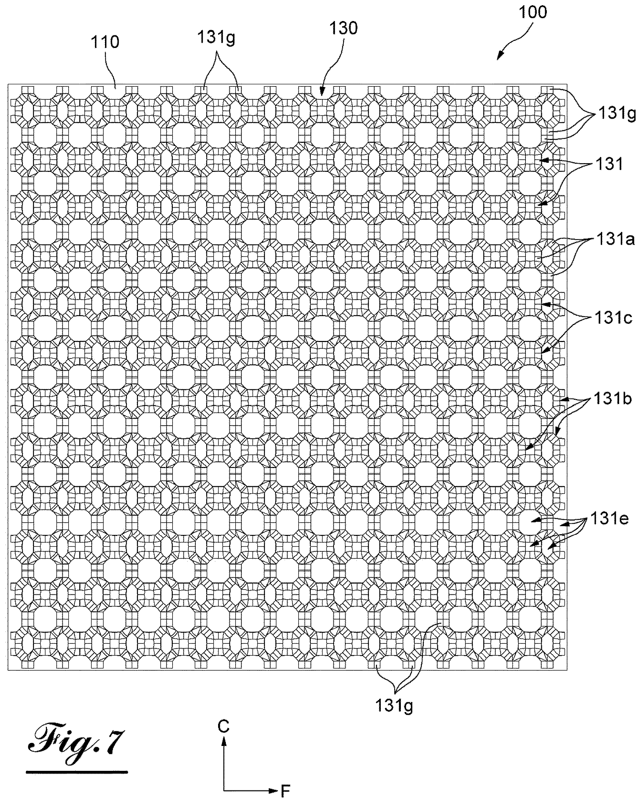

Une telle structure des alvéoles 131 forme également des passages 131d de coulée de grande dimension, disposés suivant l'axe C de coulée comme on peut le voir sur la figure 5A, et des passages 131e latéraux de dimension réduite, disposés suivant l'axe L latéral comme on peut le voir sur la figure 7 dans laquelle le panneau 120 externe n'est pas représenté.

Selon un mode de réalisation, les passages 131d de coulée s'inscrivent dans des cercles de diamètre 14 mm, plus ou moins 10%.

Selon un mode de réalisation, les passages 131e latéraux solidaires des panneaux 110, 120 et les passages 131e latéraux séparant deux alvéoles 131 suivant l'axe L s'inscrivent dans des cercles de diamètre 4 mm, plus ou moins 10%.

Les dimensions des passages 131d de coulée et des passages 131e latéraux permettent d'obtenir une paroi 100 ayant une résistance accrue contre une intrusion suivant l'axe L latéral en améliorant la retenue du matériau de remplissage durci tout en assurant une bonne coulabilité du matériau de remplissage durci autour de la structure 130 alvéolée lors de la fabrication de la paroi 100.

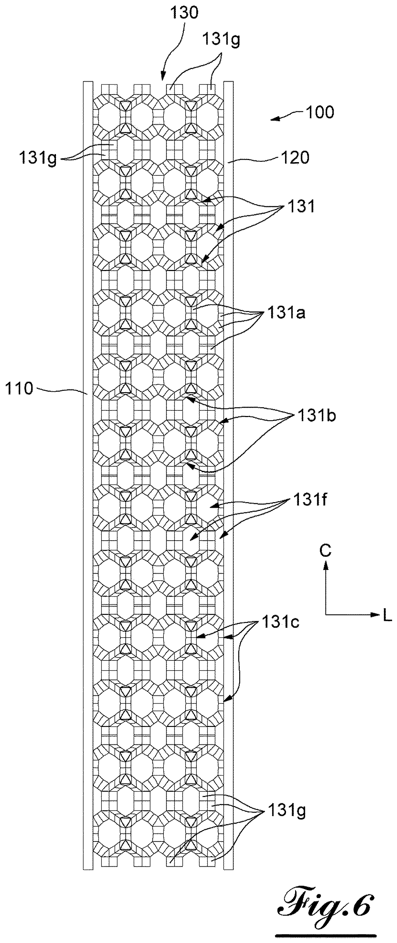

Selon le mode réalisation représenté, la structure 130 alvéolée comprend des passages 131f faciaux suivant un axe F facial sensiblement perpendiculaire à l'axe L latéral à l'axe C de coulée, comme on peut le voir sur la figure 6.

Ces passages 131f faciaux améliorent la répartition du matériau de remplissage et allègent la paroi 100.

Le mode de réalisation illustré sur les figures 2, 3, 4, 5A, 6 et 7 est un troisième mode de réalisation de l'invention établit à la suite d'une conception longue et complexe.

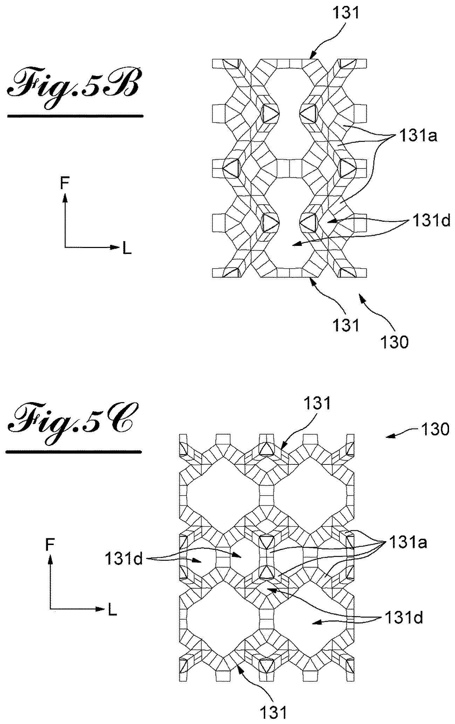

En effet, un premier mode de réalisation des alvéoles 131 est illustré, de dessus, sur la figure 5B et un deuxième mode de réalisation des alvéoles 131 est illustré, de dessus, sur la figure 5C.

Ces premier et deuxième modes de réalisation des alvéoles 131, comprennent également des branches 131a formant des formes géométriques et des passages 131d, 131^{e}, 131f suivant les trois axes L, C, F.

Le tableau 1 ci-dessous compare, en fonction de résultats d'essais, ces trois modes de réalisation suivant plusieurs critères.

**[Tableau 1]**

| | | Premier mode réalisation | | Deuxième mode de réalisation | | Troisième mode de réalisation | |
|---|---|---|---|---|---|---|---|
| | Coefficient | Note (1 à 5) | Note pondérée | Note (1 à 5) | Note pondérée | Note (1 à 5) | Note pondérée |
| Poids | 2 | 3 | 6 | 3 | 6 | 3 | 6 |
| Ecoulement du matériau de remplissage | 4 | 2 | 8 | 1 | 4 | 5 | 20 |
| Résistance aux chocs | 5 | 2 | 10 | 1 | 5 | 5 | 25 |
| Résistance à l'arrachement | 5 | 3 | 15 | 5 | 25 | 4 | 20 |
| Conduction thermique | 3 | 2 | 6 | 3 | 9 | 5 | 15 |
| Nettoyage | 2 | 1 | 2 | 2 | 4 | 5 | 10 |
| Contrôle | 3 | 1 | 3 | 2 | 6 | 5 | 15 |
| TOTAL | | 14 | 50 | 17 | 59 | 32 | 111 |

Comme on peut le remarquer sur le tableau 1 ci-dessus, le poids des différents modes de réalisation illustrés est sensiblement identique.

En revanche, l'écoulement du matériau de remplissage avant durcissement lors de la fabrication de la paroi 100 et la résistance aux chocs suivant l'axe L latéral sont nettement meilleurs dans le troisième mode de réalisation.

La résistance à l'arrachement de la paroi 100 externe est proche pour les trois modes de réalisation, le deuxième mode de réalisation étant légèrement plus résistant.

La conduction thermique d'une paroi 100 à l'autre, est nettement meilleure pour le troisième mode de réalisation.

On remarque que le troisième mode de réalisation permet un nettoyage des dépôts créés par la fabrication de la paroi 100 monobloc nettement plus efficace que pour les deux autres modes de réalisation.

On remarque également que le troisième mode de réalisation permet un contrôle visuel de l'évacuation des dépôts après la fabrication de la paroi 100 nettement plus efficace que pour les deux autres modes de réalisation. Ce contrôle permet de s'assurer que chaque alvéole 131 est bien creuse et non obstruée.

La paroi 100, par exemple pour enceinte 1 sécurisée, telle que décrite permet de ralentir une intrusion au travers de celle-ci.

La paroi 100 présente une résistance au moins égale à celle des parois de l'art antérieur.

La paroi 100 requière une fabrication simplifiée, par exemple par fabrication additive, directe ou indirecte.

La paroi 100 est plus légère que les parois de l'art antérieur.

La paroi 100 facilite le bon écoulement du matériau de remplissage durci.

La paroi 100 améliore l'absorption des chocs par rapport à l'art antérieur.

## Revendications

1. Paroi (100) de protection contre une intrusion comprenant un panneau (110) interne, un panneau (120) externe et une structure (130) alvéolée formant un réseau à trois dimensions entre le panneau (110) interne et le panneau (120) externe et rendant plus difficile ladite intrusion, la paroi (100) comprenant également un matériau de remplissage durci dans les alvéoles (131) de la structure (130) alvéolée et se morcelant lors d'une tentative d'intrusion tout en restant emprisonné dans la paroi (100) grâce à la structure (130) alvéolée, la paroi (100) étant **caractérisée en ce que** la structure alvéolée (130) forme avec le panneau interne (110) et le panneau externe (120) un dispositif monobloc (110, 120, 130) dont chaque alvéole (131) de la structure alvéolée (130) forme autour du matériau de remplissage un premier passage (131d) disposé suivant un axe (C) de coulée sensiblement parallèle au panneau (110) interne et au panneau (120) externe plus grand qu'un passage latéral (131e) formé par ladite alvéole (131) suivant un axe (L) latéral perpendiculaire à l'axe (C) de coulée, au panneau (110) interne et au panneau (120) externe.

2. Paroi (100) de protection selon la revendication précédente, **caractérisée en ce que** la structure (130) alvéolée forme, suivant une direction parallèle à l'axe (L), au moins deux alvéoles (131).

3. Procédé de fabrication d'une paroi (100) de protection contre une intrusion, le procédé comprenant la fabrication additive, directe ou indirecte, d'un dispositif (110, 120, 130) comportant un panneau (110) interne, un panneau (120) externe et une structure (130) alvéolée disposée entre le panneau (110) interne et le panneau (120) externe et rendant plus difficile ladite intrusion, le procédé comprenant la coulée d'un matériau de remplissage entre le panneau (110) interne et le panneau (120) externe suivant un axe (C) de coulée sensiblement parallèle au panneau (110) interne et au panneau (120) externe, le matériau de remplissage se répartissant dans les alvéoles (131) de la structure (130) alvéolée, et le durcissement du matériau de remplissage réparti dans les alvéoles, le matériau de remplissage se morcelant lors d'une tentative d'intrusion tout en restant emprisonné dans la paroi (100) grâce à la structure (130) alvéolée, le procédé étant **caractérisé en ce que** la fabrication de la structure (130) alvéolée forme un dispositif (110, 120, 130) monobloc dont chaque alvéole (131) forme un passage (131d) de coulée suivant l'axe (C) de coulée plus grand qu'un passage (131e) latéral formé par ladite alvéole (131) suivant un axe (L) latéral perpendiculaire à l'axe (C), au panneau (110) interne et au panneau (120) externe.

4. Procédé de fabrication selon la revendication précédente, **caractérisé en ce que** la fabrication de la structure (130) alvéolée forme, dans une direction parallèle à l'axe (L) latéral sensiblement perpendiculaire au panneau (110) interne et au panneau (120) externe, au moins deux alvéoles (131).

5. Procédé de fabrication selon l'une quelconque des revendications 3 ou 4, **caractérisé en ce que** la fabrication de la structure (130) alvéolée forme, au niveau d'une section sensiblement parallèle au panneau (110) interne et au panneau (120) externe, des zones creuses et des zones pleines, un pourcentage de la superficie desdites zones creuses par rapport à la superficie desdites zones pleines étant supérieur à 85%, plus ou moins 10 points.

6. Procédé de fabrication selon l'une quelconque des revendications 3 à 5, **caractérisé en ce que**, lors de la fabrication du dispositif (110, 120, 130), la distance la plus courte séparant le panneau (110) interne et le panneau (120) externe en suivant des branches (131a) des alvéoles (131) de la structure (130) alvéolée est au moins 1,4 fois, plus ou moins 10%, supérieure à une distance séparant le panneau (110) interne et le panneau (120) externe suivant l'axe (L) latéral sensiblement perpendiculaire au panneau (110) interne et au panneau (120) externe.

7. Procédé de fabrication selon la revendication précédente, **caractérisé en ce que** la distance séparant le panneau (110) interne et le panneau (120) externe suivant l'axe (L) latéral est comprise entre 35 millimètres et 150 millimètres.

8. Procédé de fabrication selon l'une quelconque des revendications 3 à 7, **caractérisé en ce que** le dispositif (110, 120, 130) est fabriqué en acier, en alliage métallique ou en céramique.

9. Procédé de fabrication selon l'une quelconque des revendications 3 à 8, **caractérisé en ce que** le matériau de remplissage introduit est du béton, du béton haute performance, du béton cellulaire, de la mousse réfractaire ou du bitume.

10. Enceinte (1) à accès sécurisé comprenant au moins deux parois (100) de protection selon l'une quelconque des revendications 1 ou 2, les au moins deux parois (100) formant un unique ensemble monobloc.

## Patentansprüche

1. Schutzwand (100) gegen ein Eindringen, umfassend eine innere Platte (110), eine äußere Platte (120) und eine wabenförmige Struktur (130), die ein Netz mit drei Dimensionen zwischen der inneren Platte (110) und der äußeren Platte (120) bildet und das Eindringen schwieriger macht, wobei die Wand (100) auch ein gehärtetes Füllmaterial in den Waben (131) der wabenförmigen Struktur (130) umfasst und sich bei einem versuchten Eindringen aufteilt und gleichzeitig dank der wabenförmigen Struktur (130) in der Wand (100) eingeschlossen bleibt, wobei die Wand (100) **dadurch gekennzeichnet ist, dass** die wabenförmige Struktur (130) mit der inneren Platte (110) und der Äußeren Platte (120) eine Monoblockvorrichtung (110, 120, 130) bildet, wobei jede Wabe (131) der wabenförmigen Struktur (130) um das Füllmaterial herum einen ersten Durchgang (131d) bildet, der gemäß einer Gussachse (C) angeordnet ist, die im Wesentlichen parallel zu der inneren Platte (110) und zu der äußeren Platte (120) ist, der grösser als ein seitlicher Durchgang (131e) ist, der von der Wabe (131) gemäß einer seitlichen Achse (L) senkrecht zu der Gussachse (C), zu der inneren Platte (110) und zu der äußeren Platte (120) gebildet ist.

2. Schutzwand (100) nach dem vorhergehenden Anspruch, **dadurch gekennzeichnet, dass** die wabenförmige Struktur (130) gemäß einer Richtung parallel zu der Achse (L) mindestens zwei Waben (131) bildet.

3. Verfahren zum Herstellen einer Schutzwand (100) gegen ein Eindringen, wobei das Verfahren das direkte oder indirekte additive Herstellen einer Vorrichtung (110, 120, 130) umfasst, die eine innere Platte (110), eine äußere Platte (120) und eine wabenförmige Struktur (130) umfasst, die zwischen der inneren Platte (110) und der äußeren Platte (120) angeordnet ist und das Eindringen schwieriger macht, wobei das Verfahren das Gießen eines Füllmaterials zwischen der inneren Platte (110) und der äußeren Platte (120) gemäß einer Gussachse (C), die im Wesentlichen parallel zu der inneren Platte (110) und zu der äußeren Platte (120) ist, wobei sich das Füllmaterial in den Waben (131) der wabenförmigen Struktur (130) verteilt, und das Aushärten des Füllmaterials, das in den Waben verteilt ist, umfasst, wobei sich das Füllmaterial bei einem versuchten Eindringen aufteilt und gleichzeitig dank der wabenförmigen Struktur (130) in der Wand (100) eingeschlossen bleibt, wobei das Verfahren **dadurch gekennzeichnet ist, dass** die Herstellung (131) der wabenförmigen Struktur (130) eine Monoblockvorrichtung (110, 120, 130) bildet, von der jede Wabe (131) einen Gussdurchgang (131d) gemäß der Gussachse (C) bildet, der grösser als ein seitlicher Durchgang (131e) ist, der von der Wabe (131) gemäß einer seitlichen Achse (L) senkrecht zu der Gussachse (C), zu der inneren Platte (110) und zu der äußeren Platte (120) gebildet ist.

4. Verfahren zur Herstellung nach dem vorhergehenden Anspruch, **dadurch gekennzeichnet, dass**, die Herstellung der wabenförmigen Struktur (130) gemäß einer Richtung parallel zur seitlichen Achse (L), die im Wesentlichen senkrecht zu der inneren Platte (110) und zu der äußeren Platte (120) ist, mindestens zwei Waben (131) bildet.

5. Verfahren zur Herstellung nach einem der Ansprüche 3 oder 4, **dadurch gekennzeichnet, dass** die Herstellung der wabenförmigen Struktur (130) auf dem Niveau einer Sektion, die im Wesentlichen parallel zu der inneren Platte (110) und zu der äußeren Platte (120) ist, hohle und volle Zonen bildet, wobei ein Prozentsatz der Oberfläche der hohlen Zonen mit Bezug auf die Oberfläche der vollen Zonen grösser 10 Punkte grösser als 85 % ist.

6. Verfahren zur Herstellung nach einem der Ansprüche 3 bis 5, **dadurch gekennzeichnet, dass** bei der Herstellung der Vorrichtung (110, 120, 130) der kürzeste Abstand, der die innere Platte (110) und die äußere Platte (120) trennt, entlang den Schenkeln (131a) der Waben (131) der wabenförmigen Struktur (130) mindestens 1,4 Mal, mehr oder weniger 10 % grösser als ein Abstand ist, der die innere Platte (110) und die äußere Platte (120) gemäß der seitlichen Achse (L) trennt, die im Wesentlichen senkrecht zu der inneren Platte (110) und zu der äußeren Platte (120) ist.

7. Verfahren zur Herstellung nach dem vorhergehenden Anspruch, **dadurch gekennzeichnet, dass** der Abstand, der die innere Platte (110) und die äußere Platte (120) gemäß der seitlichen Achse (L) trennt, im Bereich zwischen 35 Millimeter und 150 Millimeter liegt.

8. Verfahren zur Herstellung nach einem der Ansprüche 3 bis 7, **dadurch gekennzeichnet, dass** die Vorrichtung (110, 120, 130) aus Stahl, aus einer metallischen Legierung oder aus Keramik hergestellt ist.

9. Verfahren zur Herstellung nach einem der Ansprüche 3 bis 8, **dadurch gekennzeichnet, dass** das eingeführte Füllmaterial Beton, Hochleistungsbeton, Porenbeton, feuerfester Schaum oder Asphalt ist.

10. Behälter (1) mit gesichertem Zugang, umfassend mindestens zwei Schutzwände (100) nach einem der Ansprüche 1 oder 2, wobei die mindestens zwei Wände (100) eine einzige Monoblockeinheit bilden.

## Claims

1. An intrusion protection wall (100) comprising an inner panel (110), an outer panel (120) and a honeycomb structure (130) forming a three-dimensional network between the inner panel (110) and the outer panel (120) and making intrusion more difficult, the wall (100) also comprising a filler material hardened in the cells (131) of the honeycomb structure (130) and which crumbles during an intrusion attempt while remaining captured in the wall (100) owing to the honeycomb structure (130), the wall (100) being **characterized in that** the honeycomb structure (130) forms, with the inner panel (110) and the outer panel (120), a single-piece device (110, 120, 130) whereof each cell (131) of the honeycomb structure (130) forms, around the filler material, a first passage (131d) arranged along a casting axis (C) substantially parallel to the inner panel (110) and the outer panel (120) larger than a lateral passage (131e) formed by said cell (131) along a lateral axis (L) perpendicular to the casting axis (C), the inner panel (110) and the outer panel (120).

2. The protection wall (100) according to the preceding claim, **characterized in that** the honeycomb structure (130) forms at least two cells (131) along a direction parallel to the axis (L).

3. A method of manufacturing an intrusion protection wall (100), the method comprising direct or indirect additive manufacturing of a device (110, 120, 130) including an inner panel (110), an outer panel (120) and a honeycomb structure (130) arranged between the inner panel (110) and the outer panel (120) and making said intrusion more difficult, the method comprising casting a filler material between the inner panel (110) and the outer panel (120) along a casting axis (C) substantially parallel to the inner panel (110) and the outer panel (120), the filler material being distributed into the cells (131) of the honeycomb structure (130), and the hardening of the filler material distributed into the cells, the filler material crumbling during an intrusion attempt while remaining captured in the wall (100) owing to the honeycomb structure, the method being **characterized in that** the manufacture of the honeycomb structure (130) forms a single-piece device (110, 120, 130) whereof each cell (131) forms a casting passage (131d) along the casting axis (C) which is larger than a lateral passage (131e) formed by said cell (131) along a lateral axis (L) perpendicular to the axis (C), the inner panel (110) and the outer panel (120).

4. The manufacturing method according to the preceding claim, **characterized in that** the manufacture of the honeycomb structure (130) forms, in a direction parallel to the lateral axis (L) substantially perpendicular to the inner panel (110) and the outer panel (120), at least two cells (131).

5. The manufacturing method according to any one of claims 3 or 4, **characterized in that** the manufacture of the honeycomb structure (130) forms, at a section substantially parallel to the inner panel (110) and the outer panel (120), hollow zones and solid zones, a percentage of the surface area of said hollow zones relative to the surface area of said solid zones being greater than 85%, plus or minus 10 points.

6. The manufacturing method according to any one of claims 3 to 5, **characterized in that**, during the manufacture of the device (110, 120, 130), the shortest distance separating the inner panel (110) and the outer panel (120) by following branches (131a) of the cells (131) of the honeycomb structure (130) is at least 1.4 times, plus or minus 10%, greater than a distance separating the inner panel (110) and the outer panel (120) along the lateral axis (L) substantially perpendicular to the inner panel (110) and the outer panel (120).

7. The manufacturing method according to the preceding claim, **characterized in that** the distance separating the inner panel (110) and the outer panel (120) along the lateral axis (L) is between 35 millimeters and 150 millimeters.

8. The manufacturing method according to any one of claims 3 to 7, **characterized in that** the device (110, 120, 130) is manufactured from steel, metal alloy or ceramic.

9. The manufacturing method according to any one of claims 3 to 8, **characterized in that** the filler material introduced is concrete, high-performance concrete, cellular concrete, refractory foam or bitumen.

10. An enclosure (1) with secure access comprising at least two protection walls (100) according to any one of claims 1 or 2, the at least two walls (100) forming one single-piece assembly.
